# EUROPÄISCHE PATENTSCHRIFT

(11) **EP 1 068 061 B1**
(45) Veröffentlichungstag und Bekanntmachung des Hinweises auf die Patenterteilung: **29.06.2005**
(21) Anmeldenummer: 98965793.7
(22) Anmeldetag: 09.12.1998
(51) Int. Cl.: B29C 47/92, B29B 9/00, B29B 7/72

(54) **VERFAHREN ZUR HERSTELLUNG VON THERMOPLASTISCHEN KUNSTSTOFF-FORMMASSEN**
METHOD FOR PRODUCING THERMOPLASTIC SYNTHETIC MOULDING COMPOUNDS
PROCEDE DE PRODUCTION DE MATIERES MOULABLES SYNTHETIQUES THERMOPLASTIQUES

(30) Priorität: 15.12.1997 DE 19755726
(43) Veröffentlichungstag der Anmeldung: 17.01.2001
(73) Patentinhaber: Ticona GmbH, 65451 Kelsterbach (DE)
(72) Erfinder: REUSCHEL, Gerhard, D-65835 Liederbach (DE)
(86) Internationale Anmeldenummer: PCT/EP1998/007996
(87) Internationale Veröffentlichungsnummer: WO 1999/030893

(56) Entgegenhaltungen:
- EP-A- 0 238 796
- EP-A- 0 728 796
- DE-A- 2 838 110
- US-A- 4 213 747
- US-A- 4 385 016
- US-A- 4 448 736
- US-A- 5 587 434

## Beschreibung

Die Erfindung betrifft ein Verfahren zur Herstellung einer thermoplastischen Kunststoff-Formmasse, die einen Schmelzindex mit geringer Streubreite aufweist.

Thermoplastische Kunststoffe werden überwiegend durch Spritzguß oder Extrusion verarbeitet. Hierbei wird das Material geschmolzen und die Schmelze kontinuierlich oder diskontinuierlich in Formen gedrückt, in denen das Material wieder erstarrt. Auf diese Weise können sehr große Stückzahlen gleichartiger Formteile hergestellt werden. Für diese Art der Verarbeitung ist aber Voraussetzung, daß die Polymerschmelze eine bestimmte und mit einer möglichst geringen Schwankung behaftete Viskosität aufweist. Schwankungen der Schmelzviskosität innerhalb einer zur Verarbeitung bestimmten Materiallieferung können nämlich zu Störungen und erhöhtem Ausschuß führen.

Alle Rohstoffhersteller bieten daher ihre Produkte mit abgestufter Schmelzviskosität an. Diese Produkte sind jeweils identisch im chemischen Aufbau und in der Zusammensetzung der Stabilisator- und Additivmischungen. Der Unterschied zwischen den einzelnen Produkttypen liegt dann ausschließlich in der Viskosität der Schmelze. Beispiele hierfür sind in den Produktbroschüren der Hersteller angegeben.

Als Maß für die Viskosität der Schmelze wird üblicherweise der Schmelzindex als Volumenfließrate nach ISO 1133 in ml/10 min angegeben. Daneben wird aber häufig auch noch die Massenfließrate g/10 min verwendet.

Um einen definierten Schmelzindex eines Polymeren gezielt herzustellen, werden üblicherweise bei der Polymersynthese dem Gemisch aus einem oder mehreren Monomeren und Initiatoren Substanzen zugesetzt, die zu einem Abbruch des Kettenwachstums führen und wiederum eine neue Kette initiieren. Durch den Einsatz dieser "Regler" genannten Stoffe kann die mittlere Molmasse eingestellt werden. Diese Methode ist jedoch ungenau und führt zu Produkten, deren Schmeizviskosität stark streut. Die für eine kommerzielle Verwendung des Polymeren erforderliche Reproduzierbarkeit des Schmelzindexes ist nur mit großem Aufwand zu erreichen. Vor allem in kontinuierlich betriebenen Polymersynthesen ist für die Regelung des Schmeizindexes der Aufwand sehr hoch.

Bei der Copolymerisation von Trioxan mit zyklischen Ethern und zyklischen Acetalen zu Polyoxymethylen werden üblicherweise niedermolekulare offenkettige Acetale wie Methylal oder Butylal als Regler eingesetzt. Trotz des Einsatzes dieser Substanzen weisen die so hergestellten Produkte aber eine große Schwankungsbreite des Schmelzindexes auf. Schwankungen des Schmelzindexes können aber, wie oben erwähnt, zu Produktionsstörungen bei der Spritzguß- oder Extrusionsverarbeitung des Materials führen. Um die Streuung des Schmelzindexes zu verringern, werden daher üblicherweise Homogenisierungseinrichtungen nach der Granulierung eingesetzt. In diesem zusätzlichen Verarbeitungsschritt wird Material solange gemischt, bis eine geringe Streuung des Schrnelzindex über die gesamte Produktmenge erreicht ist. Dieser zusätzliche Aufwand ist jedoch mit erheblichen Kosten verbunden.

Mischungen aus Polyoxymethylen-Komponenten mit hohem und niedrigem Schmelzindex, die eine verbesserte Fließfähigkeit besitzen, sind bekannt (JP-A-50-030 949, JP-A-05-279 551). Es handelt sich dabei um Homopolymerisate wie auch um Copolymerisate. In den Beispielen werden aber jeweils nur die resultierenden Schmelzindices einer diskontinuierlich, d.h. chargenweise hergestellten Mischung angegeben, die Schwankungsbreite der Werte bei wiederholt hergestellten Mischungen kann aus dem Stand der Technik nicht entnommen werden. Es bestand daher ein Bedürfnis, die Nachteile des Standes der Technik zu vermeiden.

Die Aufgabe wurde gelöst durch ein kontinuierliches Verfahren zur Herstellung einer thermoplastischen Formmasse mit einem Schmelzindex geringer Streubreite, bei dem zwei oder mehr chemisch identische Ausgangsprodukte mit unterschiedlichem Schmelzindex in einem Granulierextruder gemischt werden, wobei der Extruder mit einem Online-Schmelzindexgerät und regelbaren Dosiersystemen ausgerüstet wird.

Als thermoplastische Formmassen, die bei dem Verfahren gemäß der Erfindung eingesetzt werden können, eignen sich die bekannten Homo- und Copolymerisate des Polyoxymethylens (POM), Polyester wie Polyethylen- und Polybutylenterephthalat, Polyamid, vorzugsweise POM.

Durch das Verfahren gemäß der Erfindung kann der Schmelzindex beispielsweise von linearen POM-Polymeren wesentlich genauer eingestellt werden kann, als dies bei der Synthese aus den Monomeren unter Einsatz von Reglern der Fall ist. Die mechanischen Eigenschaften der durch Mischen gemäß der Erfindung hergestellten Produkte unterscheiden sich auch nicht von den Eigenschaften der durch Synthese unter Verwendung von Reglern hergestellten Produkte mit gleichem Schmelzindex. Durch das Mischverfahren gemäß der Erfindung läßt sich aber von zwei oder mehr Produkten mit unterschiedlichem Schmelzindex jeder Schmelzindexwert in engen Grenzen durch Variation der jeweiligen Massenanteile einstellen, der zu mischenden Ausgangswerten liegt.

Dieses Verfahren ist sehr gut automatisierbar und für die großtechnische Produktion geeignet. Hierfür wird der Granulierextruder mit einem OnlineSchmelzindexmeßgerät und regelbaren Dosiersystemen, jeweils bekannten Apparaturen, ausgerüstet. Hersteller von geeigneten Online-Meßgeräten sind Fa. Göttfert, Büchen, Bundesrepublik Deutschland oder Reametrix, Niederlassung Deutschland, Frankfurt am Main, Bundesrepublik Deutschland. Geeignete Dosiersysteme können z.B. bezogen werden von Fa. Engelhardt, Deutschland oder K-tron-Soder, Schweiz. Als elektronischer Regler kann z.B. Typ Sipart DR 22, Hersteller Siemens AG, Karlsruhe, Deutschland, eingesetzt werden. Das Meßsignal des Schmelzindexmeßgerätes, das den Wert des zu erhaltenen Produktes besitzt, steuert nun die Dosierung der Masseströme der einzelnen Komponenten so, daß das Meßsignal konstant auf dem vorgegebenen Sollwert bleibt. Auf diese Weise können Produkte hergestellt werden, die, wie oben aufgeführt, nur noch minimale Schwankungen entweder innerhalb der einzelnen Chargen oder im kontinuierlichen Betrieb aufweisen. Zudem können beliebige, für spezielle Anwendungsfälle optimale Schmelzindices gezielt und mit geringen Streubreiten im Fließverhalten hergestellt werden. Die Schmelzindices der zur Mischung verwendeten Ausgangssubstanzen können dabei in weiten Grenzen schwanken. Durch den so möglich gewordenen Verzicht auf aufwendige, genaue Schmelzindexregelungen bei der Polymersynthese sind große Kosteneinsparungen bei der Bereitstellung der Ausgangssubstanzen für die Endproduktherstellung möglich.

Die gemäß der Erfindung erhaltenen Produkte lassen sich problemlos verarbeiten, da sich auch die Eigenschaften gegenüber den auf herkömmliche Weise hergestellte Produkte nicht ändern. Vorteilhaft ist, daß keine Schwankungen der Schmelzviskositäten auftreten und somit keine Störungen und die Bildung von Ausschuß bei der Verarbeitung im Spritzguß und bei der Extrusion zu beobachten sind.

### Beispiele

1) Zwei handelsübliche Polyacetalformmassen mit den Schmelzindices g/10/min und 13 g/10 min wurden unter Verwendung von Online-Meßgerät, elektronischer Regler und Sandwaagen kontinuierlich dem Extruder zugeführt, so daß das Online Meßsignal, eingestellt auf 9,50 g/10 min, konstant bleibt. Die Streuung des Schmelzindexes der erhaltenen Mischung betrug 0,05 g/10 min bei einem Mittelwert von 9,50 g/10 min.
   Vergleichsbeispiel 1 Handelsübliches Polyacetal des Schmelzindexbereiches 9 g/10 min wurde 10 Mal gemessen. Die Streuung der Meßwerte betrug 0,5 g/10 min bei einem Mittelwert von 9, 50 g/10 min.
2) Wie im Beispiel 1 wurde eine Formmasse hergestellt, die einen Schmelzindex von 28 g/10 min aufwies. Die Schmelzindices der Ausgangsmaterialien waren 2,5 g/10 min und 52 g/10 min. Die Streuung des Schmelzindexes der erhaltenen Mischung betrug 0, 12 g/10 min.
   Vergleichsbeispiel 2 Handelsübliches Polyacetal des Schmelzindexbereiches 28 g/10 min wurde 10 Mal gemessen. Die Streuung der Meßwerte betrug 0,8 g/10/min bei einem Mittelwert von 28 g/10 min.

## Patentansprüche

1. Verfahren zur kontinuierlichen Herstellung einer thermoplastischen Formmasse mit einem Schmelzindex geringer Streubreite, **dadurch gekennzeichnet, daß** zwei oder mehr chemisch identische Ausgangsprodukte mit unterschiedlichem Schmelzindex in einem Granulierextruder gemischt werden, wobei der Extruder mit einem Online-Schmelzindexgerät und regelbaren Dosiersystemen ausgerüstet wird.

2. Verfahren nach Anspruch 1, **dadurch gekennzeichnet, daß** das Schmelzindexgerät ein Meßsignal aussendet, durch das die Dosierung der Masseströme der einzelnen Komponenten gesteuert wird.

3. Verfahren nach Anspruch 2, **dadurch gekennzeichnet, daß** das Meßsignal auf den Wert des zu erhaltenen Produktes eingestellt wird.

4. Verfahren nach einem oder mehreren der Ansprüche 1 bis 3, **dadurch gekennzeichnet, daß** als thermoplastische Formmasse Polyoxymethylen, Polyester oder Polyamid eingesetzt wird.

## Claims

1. A process for continuous preparation of a thermoplastic molding composition having a melt flow index with a small scatter range, which comprises mixing two or more chemically identical starting materials with different melt flow index in an extruder with cutting blades, the extruder being equipped with an on-line melt flow index device and controllable metering systems.

2. The process as claimed in claim 1, wherein the melt flow index device emits a measurement signal which is used to control the metering of the flows of material of the individual components.

3. The process as claimed in claim 2, wherein the measurement signal is adjusted to the value of the product to be obtained.

4. The process as claimed in one or more of claims 1 to 3, wherein polyoxymethylene, polyester or polyamide is used as thermoplastic molding composition.

## Revendications

1. Procédé pour la production en continu d'une matière à mouler thermoplastique ayant un indice de fluidité à chaud à faible dispersion, **caractérisé en ce que** deux ou plus de deux produits de départ chimiquement identiques, à indices de fluidité à chaud différents, sont mélangés dans une extrudeuse à tête de granulation, l'extrudeuse étant munie d'un appareil de mesure en ligne d'indice de fluidité à chaud et de systèmes doseurs réglables.

2. Procédé selon la revendication 1, **caractérisé en ce que** l'appareil de mesure d'indice de fluidité à chaud émet un signal par lequel est commandé le réglage des flux massiques des composants individuels.

3. Procédé selon la revendication 2, **caractérisé en ce que** le signal de mesure est étalonné sur l'indice du produit à obtenir.

4. Procédé selon une ou plusieurs des revendications 1 à 3, **caractérisé en ce qu'**on utilise en tant que matière à mouler thermoplastique du polyoxyméthylène, du polyester ou du polyamide.
